# EUROPEAN PATENT APPLICATION

(11) **EP 4 032 498 A1**
(43) Date of publication of application: **27.07.2022**
(21) Application number: 21305074.3
(22) Date of filing: 21.01.2021
(51) Int. Cl.: A61C 5/64, B01F 13/00, A61C 5/68, B01F 11/00

(54) **AN APPARATUS FOR ACTIVATING A CARTRIDGE COMPRISING A MULTI-COMPONENT MATERIAL AND/OR FOR MIXING BY VIBRATION SAID CARTRIDGE**

(71) Applicant: Septodont ou Septodont SAS ou Specialites Septodont, 94100 Saint Maur des Fossés (FR)
(72) Inventor: The designation of the inventor has not yet been filed
(74) Representative: Icosa

(57) **Abstract**

The apparatus (1), comprising a vibration mixer (2) suitable for a cartridge (6) having a longitudinal axis and containing a multi-component material, preferably a two-component material, stored in at least two separated chambers inside the cartridge (6); said vibration mixer comprising a cartridge holder (21) and drive means for the cartridge holder (21); wherein the cartridge holder (21) is configured for receiving and locking only one end of the cartridge (6) and is configured for maintaining the longitudinal axis of the cartridge (6) on the cartridge holder (21) in a vertical position.

## Description

### FIELD OF INVENTION

The present invention relates to a vibration mixer configured to mix components stored in a cartridge (also called "amalgamator"), said components being of the same or different nature. The present invention also relates to an activation machine of a cartridge configured to provide an activated configuration of the cartridge (e.g. a configuration allowing connecting separated chambers of the cartridge containing the components stored to be mixed together in a subsequent step), to be used in combination with the vibration mixer of the invention. The present invention also refers to an apparatus comprising both the vibration mixer of the invention and the activation machine of the invention. The present invention relates to a system comprising the vibration mixer and/or the activation machine, with a cartridge containing one-component material or a multi-component material; and their uses, preferably in the medical field such as in the orthopedic field (for example, in bone restoration) or in the dental field.

### BACKGROUND OF INVENTION

Cartridges suitable for the mixing and dispensing of material are particularly interesting for dental restoration applications, in order to mix a multi-component dental restoration material and dispense it on a tooth of a subject. A dental restoration material classically comprises a powder component and a liquid component, which are mixed to form a dental cement. Especially, cartridges have been developed for dental restoration applications, in which certain amounts of a powder component and of a liquid component are previously weighed and accommodated in isolated chambers so as to prevent any accidental mixing of the two components. In such cartridges, the components can be released from the isolated chambers at a desired time and mechanically mixed with each other to form a dental cement that is dispensed from the cartridge.

Most cartridges have an oblong shape so that the commercially available vibration mixers suitable for mixing the components inside the cartridge often comprises a cartridge holder with two arms to grip the cartridge on both sides as for example, in US4871261. However, such conventional vibration mixers are not ergonomic and their use is uncomfortable for the operator as it implies handling the cartridge holder of the vibration mixer with two hands. Furthermore, the cartridge holder of conventional vibration mixers is not suitable for more sophisticated cartridges which shape is not oblong. In addition, the conventional vibration mixers do not include means making it possible to verify that the positioning of the cartridge on the cartridge holder is correct so that the correct use of these devices is very variable from one use to another. Consequently, the properties of the resulting material after the mixing step may vary.

Another drawback with the conventional vibration mixers is that these machines are bulky and strongly reduce the working space of the practitioner.

It is these drawbacks that the invention is intended more particularly to remedy by proposing a vibration mixer for mixing a multi-component material, preferably a two-component material, contained in a cartridge which is easy to operate by the operator while making the vibration of the cartridge more secure and providing more working space than conventional apparatus for the practitioner.

In addition, there is also a need for providing an activation machine for connecting the isolated chambers of the cartridge containing the components of the material, said activation machine being suitable for cartridges having a high technical level. Especially, there is a need to provide an apparatus comprising both an activation part and a vibration mixer in order to reduce the number of apparatuses for the operator and for improving handling of the multi-component cartridge suitable for dispensing the material in a subsequent step, while ensuring the security during the implementation of these steps.

### SUMMARY

For this purpose, a subject of the invention is an apparatus comprising a vibration mixer suitable for a cartridge having a longitudinal axis and containing a multi-component material, preferably a two-component material, stored in at least two separated chambers inside the cartridge; said vibration mixer comprising a cartridge holder and drive means for the cartridge holder; wherein the cartridge holder is configured for receiving and locking only one end of the cartridge and for maintaining the longitudinal axis of the cartridge on the cartridge holder in a vertical position.

According to one embodiment, the cartridge holder comprises one arm configured to cooperate with drive means of the cartridge holder; and located on the arm, preferably at one end of the arm, a cartridge holding platform configured to cooperate with one end of the cartridge, preferably with locking means present on said end of the cartridge. According to one embodiment, the arm of the cartridge holder has two ends: at one end are located drive means of the cartridge holder and on the other end is located the cartridge holding platform.

According to one embodiment, the cartridge holding platform comprises means for locking the end of the cartridge, preferably said means for locking the end of the cartridge comprise at least one protrusion, more preferably comprise two protrusions.

According to one embodiment, means for locking the end of the cartridge on the cartridge holding platform are configured to cooperate with the base section of the cartridge, preferably to cooperate with the base section of the cartridge having two opposite protrusions, more preferably the two opposite protrusions of the cartridge are two opposite locking wings. According to one embodiment, the cartridge holding platform comprises protrusions having at least one groove in their inner volumes so that to cooperate with the locking wings of the cartridge.

According to one embodiment, the apparatus further comprises an activation machine configured to apply a thrust force F₀ on one end of the cartridge in order to provide an activated configuration of the cartridge in which the separated chambers containing the components of the multi-component material are connected so that the components are allowed to contact with each other.

According to one embodiment, the apparatus further comprises a casing carrying the vibration mixer and, optionally, the activation machine.

According to one embodiment, the apparatus further comprises a lid movable to a closed position, preferably cooperating with the casing so that to form an enclosure for the vibration mixer and, optionally, the activation machine.

Another subject of the invention refers to a system comprising the apparatus as described above and a cartridge which is a cartridge for dispensing a material, the cartridge comprising:
- a sleeve having a longitudinal axis and comprising a distal wall provided with a dispensing hole;
- a barrel defining a chamber configured to receive the material, the barrel comprising a proximal open end and a breakable distal wall at its distal end, the barrel being configured to move in the sleeve along the longitudinal axis between a first position, in which the distal wall of the barrel is at a distance from the distal wall of the sleeve, and a second position, in which a sealing portion of the distal wall of the barrel is in contact with an inner surface of the distal wall of the sleeve; and
- a piston configured to seal the chamber of the barrel, the piston comprising a plate configured to move in sealing engagement in the chamber of the barrel;
and wherein:
- the sleeve comprises an internal piercing element in the vicinity of the dispensing hole, the piercing element being configured to break the distal wall of the barrel upon transition of the barrel from the first position to the second position; and
- the sleeve comprises an annular cavity around the piercing element, the annular cavity being delimited peripherally by a beveled inner surface complementary to a corresponding beveled outer surface of the barrel.

According to one embodiment, the system consists of a vibration mixer and a cartridge as defined above. According to one embodiment, the system consists of an activation machine and a cartridge as defined above. According to one embodiment, the system consists of a vibration mixer, an activation machine and a cartridge as defined above. According to one embodiment, the piston of the cartridge comprises a combination of a receptacle and a plunger, the receptacle defining a chamber and comprising a proximal open end and an openable distal wall, the plunger being movable in the chamber of the receptacle and comprising a distal rod configured to apply a pressure on the openable distal wall.

According to one embodiment, the receptacle of the cartridge comprises at least one inner radial feature configured to cooperate with at least one outer radial feature of the plunger to keep the plunger at a distance from the openable distal wall of the receptacle in a storage configuration of the cartridge, the cooperation between the inner radial feature and the outer radial feature of the plunger being releasable under the effect of a thrust force applied, preferably by the activation machine of the apparatus, on the proximal end of the plunger.

According to one embodiment, the barrel of the cartridge further comprises two diametrically opposed tabs near its proximal end; each tab being configured to be received in a corresponding housing defined by a locking wing of the sleeve arranged near the proximal end, so as to lock the barrel in the first position with respect to the sleeve.

Another object of the invention is a cartridge holder in an apparatus comprising a vibrating mixer as described above, or in a system as described above, wherein the cartridge holder is configured for receiving and locking only one end of the cartridge and is configured for maintaining the longitudinal axis of the cartridge on the cartridge holder in a vertical position.

According to one embodiment, the cartridge holding platform is configured to cooperate with the base section of the cartridge, preferably to cooperate with the base section of the cartridge having two opposite protrusions, more preferably the two opposite protrusions of the cartridge are two locking wings of the sleeve of the cartridge.

Another object of the invention is the use of the apparatus as defined above, or the system as defined above, in the medical field, preferably in the dental field or in the orthopedic field, more preferably in dental restoration.

### DESCRIPTION OF THE DRAWINGS

Features and advantages of the invention will become apparent from the following description of several embodiments of an apparatus according to the invention, this description being given merely by way of example and with reference to the appended drawings in which:
**Figure 1** is a perspective side view of an apparatus according to a first embodiment of the invention, the apparatus comprising a vibration mixer and an activation machine on which is locked a cartridge;
**Figure 2A** is a perspective side view of the cartridge holder of the Figure 1 and **Figure 2B** is a sectional view along axis AA of the cartridge holding platform of the cartridge holder of Figure 2A;
**Figure 3** is an exploded perspective view of a cartridge suitable for use in an apparatus according to a first embodiment of the invention, suitable for mixing and dispensing a two-component system material comprising a powder component and a liquid component;
**Figure 4** is a longitudinal section of the cartridge of Figure 3, in an initial storage configuration of the cartridge;
**Figure 5** is a longitudinal section similar to Figure 4, in a first activated configuration of the cartridge;
**Figure 6** is a longitudinal section similar to Figure 4, in a second activated configuration of the cartridge;
**Figure 7** is a perspective view of the vibration mixer of the apparatus of Figure 1;
**Figure 8** is a perspective side view of the vibration mixer of Figure 7;
**Figure 9** is a perspective view of the activation machine of the apparatus of Figure 1.

### ILLUSTRATIVE EMBODIMENTS OF THE INVENTION

### Apparatus 1

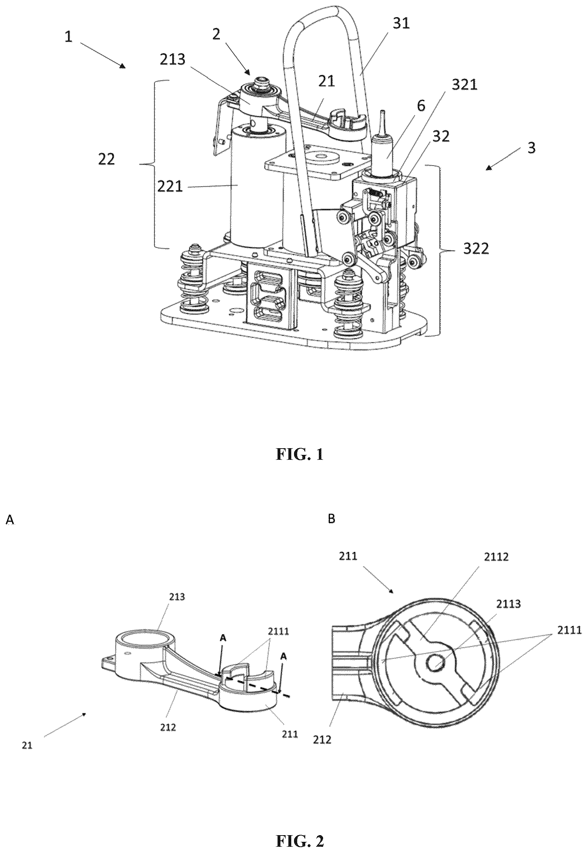

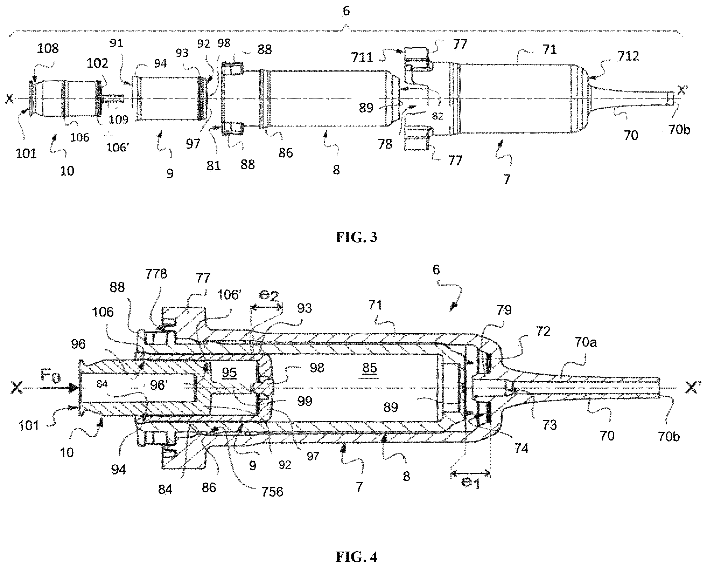

Figure 1 shows a perspective side view of an apparatus 1 according to a first embodiment of the invention, comprising both an activation machine 3 of a cartridge 6 and a vibration mixer 2 for the cartridge 6. According to this first embodiment, the cartridge 6 cooperating with the apparatus 1 of the invention is a cartridge suitable for mixing and dispensing a two-component system material comprising a powder component and a liquid component as shown in Figures 3 and 4. In Figure 1, the cartridge 6 is shown at the activation step (e.g. locked in the activation machine 3) but in a subsequent step, the cartridge 6 will be unlocked from the activation machine and locked on the cartridge holder 21 of the vibration mixer 2, either by the operator or by an automated system, in order to implement the mixing step.

### Activation machine 3

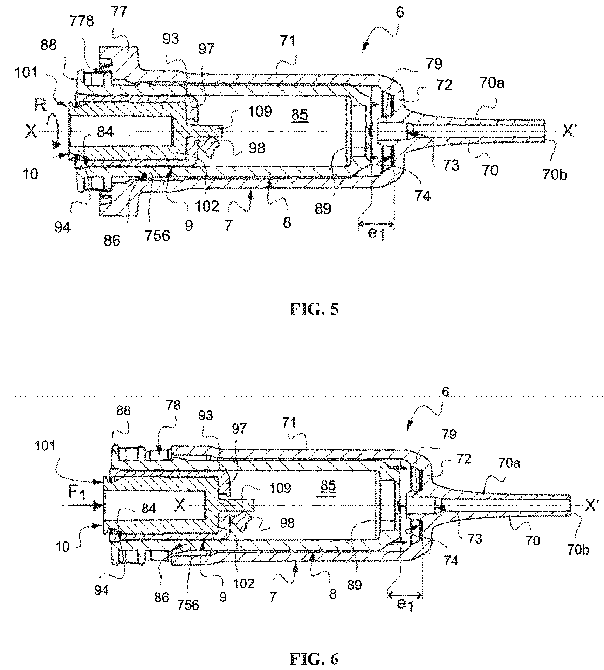

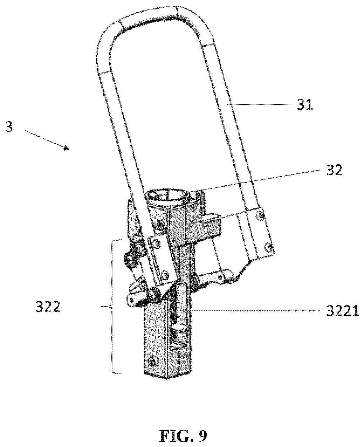

As seen in Figures 1 and 9, the activation machine 3 according to a first embodiment comprises a lever 31 configured to cooperate with means 322 for applying a thrust force F₀ on the end of the cartridge 6 which is received and locked on an activation platform 32, so that the cartridge 6 reaches an activated configuration (as described herein below and shown in Figures 5 and 6). According to this embodiment, means 322 for applying a thrust force F₀ are located under the activation platform 32 and are aligned with the longitudinal axis (X-X') of the cartridge 6 locked on the activation platform 32. In Figure 1, the surface of the activation platform 32 is horizontally oriented but according to another embodiment, the surface of the activation platform 32 may be also vertically oriented. Advantageously, the horizontal position of the activation platform 32 is more ergonomic for the practitioner handling the cartridge 6. According to one embodiment, means 322 for applying a thrust force F₀ on the cartridge 6 comprise an activation piston 3221 (seen in Figure 9). When the lever 31 is lowered, a mechanical force is transmitted to the piston 3221 so that the piston 3221 slidably moves and applies a thrust force F₀ on the base section of the cartridge 6 locked on the activation platform 32. According to one embodiment, the lever 31 may be replaced by any other means suitable for transmitting a force to the piston 3221 so that to provide a thrust force F₀ on the base section of the cartridge 6 locked on the activation platform 32. According to one embodiment, the activation piston 3221 is suitable for slidably moving inside the cartridge 6. As visible in Figure 1, the cartridge 6 is locked on the activation platform 32 by only one of its ends. Especially, the base section of the cartridge 6 is solidly retained to the activation platform 32 thanks to the presence of two protrusions 321 cooperating with the two opposite locking wings 77 of the cartridge 6 as shown in Figure 4. According to one embodiment, the number and the shape of protrusions on the activation platform 32 may be well-adapted by the skilled artisan in view of the shape of the end of the cartridge 6, in particular in view of the shape of the base section of the cartridge 6, in order to solidly retain the cartridge 6 on the activation platform 32. In the present invention, the protrusions of the activation platform 32 allow both locking the cartridge 6 on the activation machine in order to ensure good positioning of the cartridge 6 in the activation machine 3 and to ensure security during the activation step of the cartridge 6; and removing the cartridge 6 after the activation is completed.

### Vibration mixer 2

As seen in Figure 1, the vibration mixer 2 according to a first embodiment of the invention comprises a cartridge holder 21 and drive means 22 for the cartridge holder. In particular, the cartridge holder 21 as shown in Figures 1 and 2, comprises a cartridge holding platform 211 suitable for receiving and locking only one end of the cartridge 6, preferably the base section of the cartridge 6; an arm 212 configured for connecting the cartridge holder platform 211 to drive means 22 for the cartridge holder. According to one embodiment, the length of the arm 212 ranges from 30 mm to 60 mm, preferably from 40 mm to 55 mm, more preferably is 52.5 mm. As visible in Figures 1 and 2, the cartridge holding platform 21 has a circular shape and is adapted to the dimensions of the base section of the cartridge 6. However, the cartridge holding platform 21 may be in any suitable shapes and dimensions suitable for receiving and locking one end of a cartridge 6; and allowing implementing the vibration step of the cartridge 6 by the vibration mixer 2.

Especially, the base section of the cartridge 6 is solidly retained to the cartridge holding platform 211 thanks to the presence of two protrusions 2111 cooperating with the two opposite locking wings 77 of the cartridge 6 as shown in Figure 4. According to one embodiment, the number and the shape of protrusions on the cartridge holding platform 211 may be well-adapted by the skilled artisan in view of the shape of the end of the cartridge 6, in particular in view of the shape of the base section of the cartridge 6, in order to solidly retain the cartridge 6 on the cartridge holding platform 211. In the present invention, the protrusions of the cartridge holding platform 211 allow both locking the cartridge 6 on the cartridge holder 21 of the vibration mixer 2 in order to ensure good positioning of the cartridge 6 in the vibration mixer 2 and to ensure security during the vibration step (resulting in mixing of the components contained in the activated cartridge 6); and removing the cartridge 6 after the vibration step is completed. According to one embodiment, the protrusions 2111 of the cartridge holder 21 and the protrusions 321 of the activation platform 32 are identical or are configured to cooperate with the protrusions 77 of the cartridge 6.

In addition, the cartridge holding platform 211 may further comprise secondary means for well positioning and receiving the cartridge 6. As seen in figure 2B, the cartridge holding platform 211 comprises in its inner volume, a flat axis 2112 corresponding to one diameter of the cartridge holding platform 211. The middle of the flat axis 2112 comprises a protrusion 2113 configured to cooperate with the plunger 10 of the cartridge. According to one embodiment, the protrusion 2113 is under the shape of a cone. According to one embodiment, the shape and the dimensions of the protrusion 2113 are configured to be received in the inner volume of the plunger 10 of the cartridge 6.

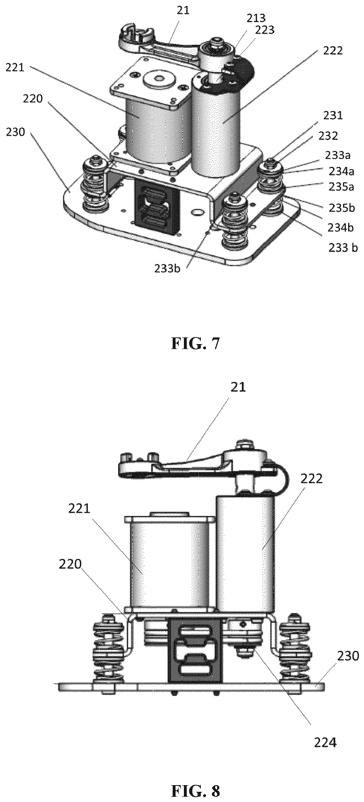

The drive means 22 for the cartridge holder 21 are configured to generate a mechanical oscillation movement (or vibration) of the cartridge holder 21. Especially, as seen in Figure 7, the drive means 22 comprise a plate 220 on which is located a motor 221 connected to an axle support 222, said axle support 222 configured to receive a vibration axis 223. As seen in Figure 1, the cartridge holder 21 is connected to drive means 22 by a ring 213. In particular, the ring 213 of the cartridge holder 21 is configured to receive one end of the vibration axis 223 of the axle support 222, said vibration axis 223 being located inside the axle support 222 and the other end of the vibration axis 223 which is not connected to the ring 213, crosses the plate 220 and is engaged in a pulley system 224. As visible in Figure 8, the motor 221 and the vibration axis 223 cooperate together thanks to the pulley system 224 located under the plate 220 so that when the motor 221 is running, the pulley of the motor 221 moves the pulley of the vibration axis 223 leading to a vibration movement of the vibration axis 223. In this way, the cartridge holder 21 vibrates. Advantageously, when the vibration step is implemented by the vibration mixer of the invention, the vibration movement of the cartridge holder 21 provides a slight clamping of the cartridge 6 on the cartridge holding platform 211 so that it is not possible for the cartridge 6 to be unlocked during the vibration step. In this way, the vibration mixer is safer for the operator.

The vibration mixer 2 may further comprise means for limiting the noise and/or the translational movements of the apparatus on the work surface where it is positioned, during its use. As seen in Figures 7 and 8, the plate 220 on which are located the motor 221, the axle support 222, the vibration axis 223 linked to the cartridge holder 221 is placed on a support 230 so that the plate 220 is raised from the support 230. As visible in Figures 7 and 8, the four corners of the plate 220 are linked to the support 230 by attachment means having vibration damping properties. According to one embodiment as seen in Figures 7 and 8, the attachment means having vibration damping properties comprise the association of a socket head cap screw 231, a nut 232, at least one silent block 233, 235 and at least one spring 234. According to one embodiment, each corner of the plate 220 is sandwiched between two silent blocks 233a, 233b and/or 235a, 235b. Advantageously, the configuration of the plate 220 and the attachment means to the support 230 seen in Figures 7 and 8 strongly reduce the noise of the vibration and keeps the apparatus from moving on the working place, during the use of the vibration mixer.

According to one embodiment, the mechanical oscillation movement of the cartridge holder 21 is a vertical oscillation movement. According to one embodiment, the mechanical oscillation movement of the cartridge holder 21 is along the longitudinal axis (X-X') of the cartridge 6. According to one embodiment, the mechanical oscillation movement of the cartridge holder 21 is an eight-shape oscillation.

According to one embodiment, the vibration mixer provides a mixing speed ranging from 8 000 rpm to 12 000 rpm. According to one embodiment, the vibration mixer 2 vibrates the cartridge 6 during a mixing time ranging from 1s to 60s, preferably from 5s to 30s. Advantageously, the use of the vibration mixer of the invention with a mixing speed ranging from 8 000 rpm to 12 000 rpm and a mixing time ranging from 1s to 60s provide a homogeneous mixture of the components contained in the cartridge.

### Casing + Lid

The apparatus 1 of the present invention may also comprise a casing (not shown in Figures) with a lid movable to a closed position in which it cooperates with the casing to form an enclosure for a cartridge 6 held by the cartridge holder 21 of the vibration mixer 2. According to one embodiment, the casing cooperating with the movable lid forms an enclosure for the vibration mixer 2 of the invention and/or for the activation machine 3 of the invention. According to one embodiment, the lid is transparent allowing the practitioner to see the vibration step. According to one embodiment, the casing comprises a switch configured to drive the implementation of the vibration step. According to one embodiment, when pressed, the switch implements the vibration step of cartridge holder 21 for a predetermined time period, preferably ranging from 1s to 60s, more preferably being 30s.

### Cartridge

In the present invention, the cartridge may be any cartridge suitable with the activation machine 3 and/or the vibration mixer 2 of the invention. Especially, the cartridge may contain any suitable material able to be mixed with the vibration mixer 2 of the invention, preferably the material is a medical composition such as for example a bone filling material or a dental material. According to one embodiment, the cartridge may be a medical cartridge such as a dental cartridge. According to one embodiment, the cartridge described in PCT/EP2020/070358 is particularly suitable to be used with the apparatus 1 of the invention, in particular with the vibration mixer 2 and/or the activation machine 3 of the invention.

Figure 3 shows an exploded view of a cartridge 6 suitable both for the mixing and the dispensing of a two-component dental restoration material comprising a powder component and a liquid component and suitable for use with the apparatus according to the invention. As visible in Figure 3, the cartridge 6 comprises successive tubular members with circular cross sections, which are configured to be inserted one inside the other while being aligned along their longitudinal axis X-X'. In this embodiment, the tubular members of the cartridge 6 include, going from the outermost element to the innermost element, an external sleeve 7, a barrel 8, a liquid receptacle 9 and a plunger 10.

The sleeve 7 comprises a body 71 including a proximal open end 711 and a distal end 712 defined by a distal wall 72 of the sleeve. The distal wall 72 is provided with a dispensing hole 73, from which extends a tubular dispensing nozzle 70 formed in one piece with the body 71 of the sleeve. The thickness t₇₀ of the peripheral wall 70a of the dispensing nozzle 70 decreases from the dispensing hole 73 toward a free end 70b of the dispensing nozzle. Thanks to this specific geometry combined to the constitutive material of the dispensing nozzle 70, which is a polymer, preferably a transparent polymer such as a transparent amorphous copolyester in this example, the dispensing nozzle 70 is deformable while being capable of retaining a constant internal diameter even when it is bent. In this way, the dispensing nozzle 70 is steerable while having a constant diameter for the dispensing of material.

The distal wall 72 of the sleeve 7 comprises an internal piercing element 79 in the alignment of the dispensing hole 73, which is intended to break a breakable distal wall 79 of the barrel 8. The piercing element 79 is a tubular element projecting internally from the distal wall 72 of the sleeve so as to be in fluid communication with the dispensing hole 73. Thanks to this arrangement, once the distal wall 89 of the barrel 8 has been broken, the tubular piercing element 79 forms a privileged passageway guiding the material contained in the barrel 8 directly to the dispensing hole 73, which limits the losses of material in the interspace between the barrel 8 and the sleeve 7.

The inner diameter d₇₉ of the piercing element 79 is slightly higher than the diameter d₇₃ of the dispensing hole 73. In this way, the opening created in the distal wall 89 of the barrel 8 under the action of the piercing element 79 has a size suitable to ensure a proper flow of the material to be dispensed. Around the piercing element 79, the sleeve 7 comprises an annular (or ring-shaped) cavity 74 whose bottom is formed by the inner surface of the distal wall 72, while the central wall of the ring is formed by the peripheral wall of the tubular piercing element 79 and the external wall of the ring is formed by a beveled inner surface complementary to a corresponding beveled outer surface 88 of the barrel 8. The complementary beveled surfaces are designed to provide an efficient sealing at the interface between the sleeve 7 and the barrel 8 adjacent to the piercing element 79 and the dispensing hole 73, so as to limit the passage of material in the interspace between the barrel 8 and the sleeve 7.

As visible in Figures 3 and 4, the barrel 8 of the cartridge 6 comprises a proximal open end 81 and a distal end 82 defined by the breakable distal wall 89. The barrel 8 delimits a chamber 85 configured to receive the powder component of the two-component dental restoration material. The constitutive material of the barrel 8 is selected to have a Water Vapor Transfer Rate (WVTR) at 23°C and 85% RH, for a film thickness of 100 µm, of less than 0.5 g/(m²-day), so as to maintain a constant humidity level in the chamber 85 suitable to protect the moisture sensitive powder component. In particular, in this example, the barrel 8 is made of a cyclic olefin copolymer (COC) having a WVTR at 23°C and 85% RH, for a film thickness of 100 µm, of the order of 0.4 g/(m²-day). According to another embodiment, the constitutive material of the barrel 8 is selected to have a Water Vapor Transfer Rate (WVTR) at 23°C and 85% RH, for a film thickness of 100 µm, of higher than 0.5 g/(m²-day).

The distal wall 89 of the barrel 8 comprises a central breakable portion surrounded by a sealing portion configured to cooperate with the inner surface of the distal wall 72 of the sleeve. Advantageously, the ratio of the surface area of the breakable portion to the surface area of the sealing portion is such that, after opening, the fins of the open breakable portion leave the dispensing hole 73 of the sleeve completely cleared, while the bearing surface of the sealing portion is a sufficiently thin ring to limit the contact area. In this way, the seal is easier to achieve with the distal wall 72 of the sleeve and the contact pressure is maximized to ensure sealing during the dispensing of the material. This arrangement ensures a proper flow of the material to be dispensed while limiting the material losses.

The diameters of the breakable portion and the piercing element 79 are also adjusted to maximize the breakage efficiency of the piercing element 79. For example, in the illustrated example, the diameter d₇₉ of the piercing element 79 is of the order of half the diameter d of the breakable portion. The breakable portion comprises six weakened lines distributed radially in a star shape, starting from a central portion of the distal wall 89. Each weakened line has a thickness t lower than the thickness t₈₉ of the rest of the distal wall 89. The central portion of the star makes it possible to have a stress concentration so that the breaking starts in the center of the star.

This arrangement of the weakened lines is configured to guide a deformation of the distal wall 89 of the barrel, when it is submitted to the action of the piercing element 89, in a corolla shape oriented away from the dispensing nozzle 70. In practice, the rupture of the distal wall 89 is obtained through a displacement of the barrel 8 in the sleeve 7 along the longitudinal axis X-X' between a first position, visible in Figures 4, 5, 6, in which the distal wall 89 of the barrel is at a distance ei from the distal wall 72 of the sleeve, and a second position, (not represented), in which the sealing portion of the distal wall 89 of the barrel is in contact with the inner surface of the distal wall 72 of the sleeve and the complementary beveled surfaces cooperate, thus providing a sealing between the sleeve 7 and the barrel 8.

The barrel 8 also comprises two diametrically opposed tabs 88 near its proximal end 81. Each tab 88 is configured to be received in a corresponding housing 778 defined by a locking wing 77 of the sleeve 7 arranged near the proximal end 71, so as to lock the barrel 8 in the first position with respect to the sleeve 7. This locked configuration of the cartridge 6 ensures that the distal wall 89 of the barrel 8 remains at the distance ei from the distal wall 72 of the sleeve, so that the cartridge 6 can be manipulated without any risk of the distal wall 89 being pierced by the piercing element 79, which makes it possible to implement a mixing step prior to the dispensing step.

In addition, the barrel 8 comprises an outer radial collar 86 configured to cooperate with inner radial recesses 756 formed by six clipping members 75 distributed circumferentially inside the body 71 of the sleeve 7. The cooperation between the outer radial collar 86 and the inner radial recesses 756 makes it possible to keep the barrel 8 in the first position with respect to the sleeve 7 even when the tabs 88 are disengaged from the housings 778, thus allowing the cartridge 6 to be secured in a storage configuration even when the locking system 88/778 is not active.

As can be seen particularly in Figure 6, the body 71 of the sleeve 7 also comprises two diametrically opposed longitudinal grooves 78 near its proximal end 711, which are configured to guide the displacement of the tabs 88 of the barrel 8 when the barrel is moved from the first position to the second position. The longitudinal grooves 78 ensure a guiding of the barrel 8 near the proximal end 711, in its movement towards the piercing element 79, while another guiding is ensured near the proximal end 712 by six guiding ribs 76 distributed circumferentially inside the body 71 of the sleeve. The guiding means 76 and 78 improve the stability of the displacement of the barrel 8 to reach the dispensing configuration of the cartridge 6.

The chamber 85 of the barrel 8 is sealed by means of a piston formed by the combination of the liquid receptacle 9 and the plunger 10. In this illustrative example, the receptacle 9 is made of low-density polyethylene (LDPE) and the plunger 10 is made of acrylonitrile butadiene styrene (ABS). The receptacle 9 comprises a proximal open end 91 and a distal end 92 defined by an openable distal wall 97. The receptacle 9 delimits a chamber 95 configured to receive the liquid component of the two-component dental restoration material. The distal wall 97 of the receptacle 9 comprises a detachable portion 98 attached to the rest of the distal wall by an annular connecting part 99. The annular connecting part 99 comprises a solid portion extending over an angle α of the order of 60°, and a weakened portion having a thickness t less than the thickness t of the solid portion, so as to form a hinge. This arrangement makes it possible to open the distal wall 97 of the receptacle 9 by rupturing only the weakened portion, so that the detachable portion 98 flips out of the receptacle 9 while remaining connected to the distal wall 97 of the receptacle 9 through the hinge formed by the solid portion.

The receptacle 9 is configured to move in sealing engagement in the chamber 85 of the barrel 8. To this end, the receptacle 9 is provided externally with a peripheral sealing rib 93 configured to prevent the passage of the liquid component, initially contained in the chamber 95 of the receptacle 9, toward the interspace between the barrel 8 and the receptacle 9, when the distal wall 97 of the receptacle is open and the receptacle 9 is moved towards the distal wall 89 of the barrel.

In practice, the opening of the distal wall 97 of the receptacle 9 is obtained thanks to a rod 109 extending distally from the distal wall 102 of the plunger 10. More precisely, the chamber 95 of the receptacle 9 is sealed by means of the plunger 10, which is movable in the chamber 95 and whose distal rod 109 is configured to apply a pressure on the detachable portion 98 of the distal wall 97 of the receptacle. Before the opening of the distal wall 97, the powder component is hermetically received in the chamber 85 of the barrel 8 and the liquid component is hermetically received in the chamber 95 of the receptacle 9. The two components can then be easily mixed together at a desired time, so as to form the material to be dispensed, by opening the openable distal wall 97 of the receptacle through application of a pressure on the detachable portion 98 with the distal rod 109 of the plunger and applying a vibration to the cartridge 6 in this activated configuration, either manually or by means of a vibration mixer.

The receptacle 9 comprises two inner peripheral grooves 96, 96' configured to cooperate with two corresponding outer peripheral ribs 106, 106' of the plunger 10 to keep the plunger 10 at a distance e₂ from the openable distal wall 97 of the receptacle 9 in a storage configuration of the cartridge 6. The cooperation between the inner peripheral grooves 96, 46' and the outer peripheral ribs 96, 96' is releasable under the effect of a thrust force F₀ applied on the proximal end 101 of the plunger 10, e.g. by means of an activation machine. The cooperating radial features 96, 106 and 96', 106' between the receptacle 9 and the plunger 10 make it possible to secure the cartridge 6 in the storage configuration where the powder component and the liquid component are separated, the first one being received in the chamber 85 of the barrel while the second one is received in the chamber 95 of the receptacle, without risk of accidental mixing of the two components.

The barrel 8 also comprises an inner peripheral groove 84 near its proximal end 81, which is configured to cooperate with an outer peripheral rib 94 of the receptacle 9 to keep the distal wall 97 of the receptacle 9 at a distance from the distal wall 89 of the barrel 8 before the piston formed by the combination of the receptacle 9 and the plunger 10 is moved towards the distal wall 89 of the barrel for the dispensing of the material. The cooperating radial features 84, 94 between the barrel 8 and the receptacle 9 make it possible to have a two-step transition of the cartridge 6 towards the dispensing configuration, obtained through the application of a thrust force F₁ on the proximal end 101 of the plunger 10, e.g. by means of a dispensing apparatus.

More specifically, in a first step of initiating the dispensing of the material, the barrel 8 is displaced relative to the sleeve 7 from the first position to the second position, until the distal wall 89 of the barrel is in contact with the distal wall 72 of the sleeve and broken by the piercing element 79. In this first step, the radial features 84, 94 between the barrel 8 and the receptacle 9 are mutually engaged so that the barrel 8, the receptacle 9 and the plunger 10 move integrally with one another. In a second step of dispensing the material through the dispensing nozzle, the piston formed by the combination of the receptacle 9 and the plunger 10 is displaced relative to the barrel 8, the radial features 84, 94 between the barrel 8 and the receptacle 9 being mutually disengaged in this second step.

### Methods

The present invention also refers to a method for mixing the components of a multi-component material stored in a cartridge, preferably a two-component material, by means of the apparatus 1 according to the invention in cooperation with the cartridge, preferably the cartridge 6 as defined above (and shown in Figures 3, 4, 5 and 6).

The method for mixing the components of a two-component material stored in a cartridge 6 as defined above, where the two-component material comprises a powder component, initially received in the chamber 85 of the barrel 8, and a liquid component, initially received in the chamber 95 of the receptacle 9, comprises steps as described below.

### Activation step by the activation machine 3

Initially, the cartridge 6 is in the storage configuration shown in Figure 4, in which the plunger 10 is kept at a distance e₂ from the openable distal wall 97 of the receptacle 9 by cooperation between the inner grooves 96, 96' of the receptacle 9 and the outer ribs 106, 106' of the plunger 10. In this storage configuration, the powder component is hermetically received in the chamber 85 of the barrel 8 and the liquid component is hermetically received in the chamber 95 of the receptacle 9.

Starting from this configuration, the base section of the cartridge 6 is placed on the activation platform 32 of the activation machine 3. The operator turns a quarter turn the cartridge 6 about the longitudinal axis (X-X') of the cartridge so that the assembly comprising the barrel 8, the receptacle 9 and the plunger 10 united in rotation, is turned relative to the sleeve 7. In this way, the tabs 88 of the barrel are inserted in the housings 778 of the locking wings 77 of the sleeve, thus reaching the locked configuration shown in Figure 5, in which the distal wall 89 of the barrel 8 is kept at a distance ei from the distal wall 72 of the sleeve 7.

Then, a thrust force F₀ is applied by the actuation of the lever 31 of the activation machine 3 in cooperation with an activation piston 3221, on the proximal end 101 of the plunger 10, so that the distal rod 109 of the plunger 10 applies a pressure on the detachable portion 98 of the distal wall 97 of the receptacle 9, thus reaching the activated configuration shown in Figure 5. According to one embodiment, the thrust force F₀ can be applied by any other means known by the skilled artisan, different from a lever.

### Mixing step by the vibration mixer 2

Then, the activated cartridge 6 is locked on the cartridge holder 21 of the vibration mixer 2 by means of the cooperation of the locking wings 77 of the sleeve 7 of the cartridge with the protrusions 2111 of the cartridge holding platform 211. Advantageously, in the activated configuration shown in Figure 4, the cartridge 6 can be vibrated without any risk of the distal wall 89 of the barrel 8 being pierced by the piercing element 79, thanks to the cooperation between the tabs 88 and the locking wings 77.

The lid 5 of the casing 4 enclosing the vibration mixer 2 is closed so as to secure the vibration step for the operator. Implementation of the vibration step is achieved by pushing on a switch located on the frontside of the casing. After a pre-determined vibration time of about 30s, the operator can unlock the cartridge 6 from the cartridge holder 21. For this goal, the assembly comprising the barrel 8, the receptacle 9 and the plunger 10, united in rotation, is turned relative to the sleeve 7 in the direction of the arrow R of Figure 5 so as to extract the tabs 88 of the barrel from the housings 778 of the sleeve, thus reaching the unlocked configuration shown in Figure 6.

In this unlocked configuration, in an optional subsequent step, a thrust force F₁ may be applied on the proximal end 101 of the plunger 10, e.g. by means of a dispensing apparatus, in order to dispense part or all of the mixed material to a desired location, for instance on a tooth.

### Uses in the medical field, dental field

In the present invention, the vibration mixer and/or the activation machine, in cooperation with a cartridge, may be used in medical fields such as orthopedic field (for example, in bone restoration) and/or dental field for examples.

The invention is not limited to the examples described and shown. In particular, other materials and shapes than those described above can be considered for the constitutive members of a cartridge to be used with a vibration mixer and/or activation machine according to the invention.

## Claims

1. An apparatus (1) comprising a vibration mixer (2) suitable for a cartridge (6) having a longitudinal axis (X-X') and containing a multi-component material stored in at least two separated chambers inside the cartridge (6); said vibration mixer comprising a cartridge holder (21) and drive means (22) for the cartridge holder (21); wherein the cartridge holder (21) is configured for receiving and locking only one end of the cartridge (6) and for maintaining the longitudinal axis (X-X') of the cartridge (6) on the cartridge holder (21) in a vertical position.

2. The apparatus according to claim **1,** wherein the cartridge holder (21) comprises one arm (212) configured to cooperate with the drive means (22) of the cartridge holder; and located at one end of the arm (212), a cartridge holding platform (211) configured to cooperate with one end of the cartridge (6), preferably with locking means (77) present on said end of the cartridge (6).

3. The apparatus according to claim **2,** wherein the cartridge holding platform (211) comprises means for locking one end of the cartridge (6), preferably said means for locking one end of the cartridge (6) comprising at least one protrusion (2111), more preferably comprising two protrusions (2111).

4. The apparatus according to claim **3,** wherein means for locking the one end of the cartridge (6) on the cartridge holding platform (211) are configured to cooperate with the base section of the cartridge (6), preferably to cooperate with the base section of the cartridge (6) having two opposite protrusions, more preferably the two opposite protrusions of the cartridge (6) being two opposite locking wings (77).

5. The apparatus according to any one of claims **1** to **4,** wherein the apparatus further comprises an activation machine (3) configured to apply a thrust force F₀ on one end of the cartridge (6) in order to provide an activated configuration of the cartridge in which the separated chambers containing the components of the multi-component material are connected so that the components are allowed to contact with each other.

6. The apparatus according to any one of claims **1** to **5,** wherein the apparatus (1) further comprises a casing (4) carrying the vibration mixer (2) and optionally, the activation machine (3).

7. The apparatus according to claim **6,** wherein the apparatus (1) further comprises a lid (5) movable to a closed position, preferably cooperating with the casing (4) so that to form an enclosure for the vibration mixer (2) and optionally, the activation machine (3).

8. A system comprising the apparatus according to any one of claims **1** to **7,** and a cartridge (6) which is a cartridge for dispensing a material, wherein the cartridge comprises:
- a sleeve (7) having a longitudinal axis (X-X') and comprising a distal wall (77) provided with a dispensing hole (73);
- a barrel (8) defining a chamber (85) configured to receive the material, the barrel (8) comprising a proximal open end (81) and a breakable distal wall (89) at its distal end (82), the barrel (8) being configured to move in the sleeve (7) along the longitudinal axis (X-X') between a first position, in which the distal wall (89) of the barrel (8) is at a distance (ei) from the distal wall (77) of the sleeve (7), and a second position, in which a sealing portion of the distal wall (89) of the barrel (8) is in contact with an inner surface of the distal wall (77) of the sleeve (7);
- a piston (9) configured to seal the chamber (85) of the barrel (8), the piston (9) comprising a plate (97) configured to move in sealing engagement in the chamber (85) of the barrel (8);
- wherein the sleeve (7) comprises an internal piercing element (79) in the vicinity of the dispensing hole (73), the piercing element (79) being configured to break the distal wall (89) of the barrel (8) upon transition of the barrel (8) from the first position to the second position; and
- the sleeve (7) comprises an annular cavity (74) around the piercing element (79), the annular cavity (74) being delimited peripherally by a beveled inner surface complementary to a corresponding beveled outer surface of the barrel (8).

9. The system according to claim **8,** wherein the piston (9) of the cartridge (6) comprises a combination of a receptacle (9) and a plunger (10), the receptacle (9) defining a chamber (95) and comprising a proximal open end (91) and an openable distal wall (97), the plunger (10) being movable in the chamber (95) of the receptacle (9) and comprising a distal rod (109) configured to apply a pressure on the openable distal wall (97).

10. The system according to claim **9,** wherein the receptacle (9) of the cartridge (6) comprises at least one inner radial feature (96, 96') configured to cooperate with at least one outer radial feature (106, 106') of the plunger (10) to keep the plunger (10) at a distance (e₂) from the openable distal wall (97) of the receptacle (9) in a storage configuration of the cartridge (6), the cooperation between the inner radial feature (96, 96') and the outer radial feature (106, 106') of the plunger (10) being releasable under the effect of a thrust force (Fo) applied, preferably by the activation machine (3) of the apparatus (1), on the proximal end (101) of the plunger (10).

11. The system according to any one of claims **8** to **10,** wherein the barrel (8) of the cartridge (6) further comprises two diametrically opposed tabs (88) near its proximal end (81); each tab (88) is configured to be received in a corresponding housing (778) defined by a locking wing (77) of the sleeve (7) arranged near the proximal end (71), so as to lock the barrel (8) in the first position with respect to the sleeve (7).

12. A cartridge holder (21) in an apparatus comprising a vibrating mixer according to any one of claims **1** to **7,** or in a system according to any one of claims **8** to **11,** wherein the cartridge holder (21) is configured for receiving and locking only one end of the cartridge (6) and is configured for maintaining the longitudinal axis (X-X') of the cartridge (6) on the cartridge holder (21) in a vertical position.

13. The cartridge holder (21) according to claim **12,** wherein the cartridge holding platform (211) are configured to cooperate with the base section of the cartridge (6), preferably to cooperate with the base section of the cartridge (6) having two opposite protrusions, more preferably the two opposite protrusions of the cartridge (6) are two locking wings (77) of the sleeve (7) of the cartridge (6).

14. Use of the apparatus (1) according to any one of claims **1** to **7,** or the system according to any one of claims **8** to **11,** in the medical field.

15. Use according to claim **14,** in the dental field or in the orthopedic field, preferably in dental restoration.
